Europäisches Patentamt

European Patent Office

Office européen des brevets

(11) Veröffentlichungsnummer: **0 383 217**
**A2**

# (12) EUROPÄISCHE PATENTANMELDUNG

(21) Anmeldenummer: **90102654.2**

(22) Anmeldetag: **10.02.90**

(51) Int. Cl.5: **G01N 27/06**

(30) Priorität: **13.02.89 DE 3904221**

(43) Veröffentlichungstag der Anmeldung:
**22.08.90 Patentblatt 90/34**

(84) Benannte Vertragsstaaten:
**AT BE CH DE DK ES FR GB GR IT LI LU NL SE**

(71) Anmelder: **LANG APPARATEBAU GMBH**
**Raiffeisenstrasse 7**
**D-8227 Siegsdorf/Obb.(DE)**

(72) Erfinder: **Wagner, Georg F.**
**Ludwig-Ganghofer-Str.22**
**D-8240 Berchtesgaden(DE)**

(74) Vertreter: **Selting, Günther, Dipl.-Ing. et al**
**Patentanwälte von Kreisler, Selting, Werner**
**Deichmannhaus am Hauptbahnhof**
**D-5000 Köln 1(DE)**

(54) **Verfahren und Vorrichtung zur Schaumerkennung.**

(57) Zur Erkennung und Bewertung von Schaumentwicklung auf oder in einer Flüssigkeit wird das Leitfähigkeitssignal (18) einer im Schaum befindlichen Leitfähigkeitsmeßeinrichtung benutzt. Dieses Signal wird in digitaler Form von einem Signalprozessor einer Frequenzanalyse unterzogen. Wenn eine Frequenzkomponente oder eine charakteristische Frequenz des Signalspektrums oberhalb einer unteren Grenzfrequenz liegt, wird dies als Kriterium für übermäßige Schaumentwicklung verwertet. Der Signalprozessor bildet ferner die Hüllkurven (19,20) des Leitfähigkeitssignals (18). Ein weiteres Kriterium für Schaumerkennung besteht darin, daß die Differenz zwischen beiden Hüllkurven einen vorgegebenen Grenzwert übersteigt. Die Erfindung ermöglicht nicht nur die Erkennung von Schaum sondern zugleich eine Bewertung des Schäumungsvorgangs. Es kann ein Regelsignal erzeugt werden, um die Zugabe von Schauminhibitor zur Flüssigkeit zu dosieren.

FIG. 3

Xerox Copy Centre

EP 0 383 217 A2

## Verfahren und Vorrichtung zur Schaumerkennung

Die Erfindung betrifft ein Verfahren der im Oberbegriff des Patentanspruchs 1 angegebenen Art und eine Vorrichtung zur Durchführung des Verfahrens.

Bei schaumbildenden Prozessen, wie beispielsweise beim Waschen von Wäsche oder beim Reinigen von Maschinen mit schaumbildenden Flüssigkeiten ist eine übermäßige Schaumentwicklung unerwünscht, da diese in Waschmaschinen oder auch Reinigungsbädern zum Reinigen von Glasflaschen oder Entfetten von Bandstahloberflächen zu einem Überschäumen der Reinigungsbäder und damit zu einem erheblichen Verlust an waschwirksamen Substanzen führen kann. Weiterhin beeinträchtigen große Schaummengen nachteilig die Wirkung von mechanisch auf das zu reinigende Gut einwirkenden Einrichtungen, die in derartigen Prozessen üblicherweise eingesetzt werden, so daß die Wasch- und Reinigungsmittel in den Reinigungsbädern derartiger Anlagen nicht ihr volles Reinigungsvermögen entwickeln können. Beispielsweise unterstützt in Haushaltswaschmaschinen die rotierende Waschtrommel als Waschmechanik den Wasch- und Reinigungsprozeß und kann diese Waschmechanik bei übermäßiger Schaumentwicklung nicht ihre volle, den Waschprozeß unterstützende Wirkung auf die Wäsche entfalten.

US-A-2 490 634 beschreibt einen Geschirrspüler, der unterhalb des das Geschirr aufnehmenden Spülraums eine Schaumerkennungseinrichtung aufweist, die aus zwei einander gegenüber angeordneten Elektroden besteht. Diese Elektroden sind Bestandteil einer Meßbrücke. Wenn Schaum zwischen die Elektroden gelangt, werden diese kurzgeschlossen, wodurch über eine elektronische Schalteinrichtung ein Thyratron gezündet wird. Hierbei wird zwar Schaum anhand der Leitfähigkeit zwischen den Elektroden erkannt, jedoch ist keine Differenzierung zwischen Schaumbildung und untergetauchtem Zustand der Elektroden möglich. Außerdem erzeugt jeder kurzzeitige Kurzschluß der Elektroden ein Schaumerkennungssignal. Grundsätzlich ist aber davon auszugehen, daß Schaumbildung bei Reinigungsprozessen stets in gewissem Maß vorhanden ist und daß nur übermäßige Schaumbildung verhindert werden soll. Wenn der Schaum aber bis zu einer bestimmten Höhe angestiegen ist, ist es für eine Bekämpfung der Schaumbildung meist zu spät.

Der Erfindung liegt die Aufgabe zugrunde, ein Verfahren zur Schaumerkennung anzugeben, das eine Differenzierung zwischen untergetauchtem Zustand und Schaum erkennt und außerdem aufgrund einer Analyse den jeweiligen Schäumungszustand ermittelt.

Die Lösung dieser Aufgabe erfolgt erfindungsgemäß mit den im Patentanspruch 1 angegebenen Merkmalen.

Das erfindungsgemäße Verfahren erlaubt nicht nur Erkennung von Schaum sondern die Erkennung eines zuvor definierten Schäumungszustandes, der angezeigt oder zur Einleitung von Gegenmaßnahmen benutzt wird. Die Erfindung geht davon aus, daß, wenn sich die Leitfähigkeitsmeßeinrichtung im Schaum befindet, durch ständig neu entstehende und zerplatzende Schaumblasen regellose Leitfähigkeitssignale unterschiedlicher Amplitude entstehen, die ein Frequenzspektrum ergeben. Dieses Frequenzspektrum wird für die Schaumbewertung ausgenutzt. Im Anfangsstadium eines Schäumungsprozesses entstehen relativ große Schaumblasen von langer Lebensdauer, so daß die Leitfähigkeitssignale ein sehr tiefes Frequenzband, in der Regel unterhalb von 1 Hz, haben. Die im Schäumungsbereich gemessenen Leitfähigkeitswerte unterscheiden sich von derjenigen Leitfähigkeit, die im untergetauchten Zustand der Meßzelle gemessen wird, und auch von derjenigen Leitfähigkeit, die bei trockener Meßzelle gemessen wird und die gleich Null ist. Die Leitfähigkeitswerte im Schäumungsbereich variieren entsprechend dem Zustand des Aufschäumens. Die Meßzelle befindet sich vorzugsweise dicht über dem Flüssigkeitspegel. Im Anfang des Aufschäumens liefert die Meßzelle niederfrequente Signale von zunächst geringen Amplituden, weil sie nur mit großen Schaumblasen in Berührung kommt. Mit zunehmenden Aufschäumungsprozeß wandern die großen Blasen nach oben und über dem Flüssigkeitspegel entsteht aufgrund des darauf lastenden Schaumgewichts eine Vielzahl kleinerer Schaumblasen von kurzer Lebensdauer. Diese kleinen Schaumblasen bewirken an der Meßzelle eine höhere Frequenz der Leitfähigkeitssignale, bis schließlich ein Gleichsignal praktisch ohne Frequenzinhalt entsteht.

Durch die Frequenzanalyse der Leitfähigkeitssignale wird erkannt, ob der Schaum sich in einem tolerierbaren (niedrigen) Zustand oder in einem nicht tolerierbaren (hohen) Zustand befindet.

Die Meßzelle braucht nicht von Anfang an über dem Flüssigkeitspegel angeordnet zu sein. Sie kann auch dicht unter dem Flüssigkeitspegel angeordnet sein. Im Falle des Aufschäumens sinkt der Flüssigkeitspegel unter die Meßzelle, so daß die Meßzelle sich dann im Schäumungsbereich befindet.

Gemäß einer Weiterbildung der Erfindung werden als zusätzliches Kriterium für die Schaumerkennung die obere und die untere Hüllkurve der Leitfähigkeitssignale benutzt. Die Hüllkurve, die die positiven bzw. negativen Spitzenwerte der Leitfähigkeitssignale verbinden, liefern ein ausgezeichnetes Kriterium für den Schäumungszustand. Es ist festgestellt worden, daß die Differenz der beiden Hüllkurven im Anfang des Schäumungsprozesses relativ gering ist, im weiteren Verlauf des Schäumens ansteigt und schließlich wieder kleiner wird. Dadurch, daß die Differenz zwischen den beiden Hüllkurven ausgewertet wird, wird erreicht, daß kurzzeitige Signalstörungen oder Ausreißer in die Bewertung nicht eingehen und daß die Dynamik des Schäumungsprozesses berücksichtigt wird. Schaum entsteht nicht schlagartig sondern kontinuierlich, z.B. durch Einwirkung von Temperatur oder Bewegung.

Die Filterung der beim Schäumen entstehenden Leitfähigkeitssignale ist mit analogen Filtern nicht oder nur sehr schwer möglich, weil diese Signale niederfrequent sind. Zweckmäßigerweise wird ein Digitalfilter benutzt, dem die Leitfähigkeitssignale in digitaler Form zugeführt werden. Dieses Digitalfilter ist vorzugsweise Bestandteil eines digitalen Signalprozessors, der eine Frequenzanalyse, z.B. Fast-Fourier-Transformation, durchführt, die durch eingebene Filterkoeffizienten definiert werden kann.

Das erfindungsgemäße Verfahren kann zur bloßen Erkennung eines bestimmten Aufschäumzustandes benutzt werden, jedoch auch zur Einleitung von Gegenmaßnahmen, z.B. zur Einleitung von Schauminhibitoren in die Flüssigkeit oder zur Aktivierung eines mechanischen Schaumzerstörers. Auf diese Weise können Wasch- und/oder Reinigungsprozesse optimiert werden. Es besteht auch die Möglichkeit, bei zu starkem Aufschäumen Flüssigkeit hinzuzugeben, so daß die Konzentration des Schaumbildners in der Flüssigkeit sich verringert.

Die Erfindung ist vorzugsweise bei Waschmaschinen und Spülmaschinen anwendbar sowie bei der Reinigung von Industriemaschinen oder z.B. von Glasflaschen.

Der Einsatz eines digitalen Signalprozessors mit einer entsprechenden Speichereinrichtung erlaubt es, den Signalverlauf abzuspeichern und die jeweils aktuellen Signale mit früheren Signalen zu vergleichen, sowie aus der Historie des Schäumungsprozesses andere Kenntnisse zu gewinnen. Die Meßzelle kann auch als Pegeldetektor zur Ermittlung des Flüssigkeitsstandes anhand des Leitwerts benutzt werden.

Im folgenden werden unter Bezugnahme auf die Zeichnungen Ausführungsbeispiele der Erfindung näher erläutert.

Es zeigen:

Fig. 1 eine schematische Darstellung einer Leitfähigkeitsmeßeinrichtung im Schnitt,

Fig. 2 ein Blockschaltbild der an die Leitfähigkeitsmeßeinrichtung angeschlossenen Auswerteschaltung und

Fig. 3 ein Diagramm der Leitfähigkeitsmeßwerte über der Zeit bei zunehmender Schäumung,

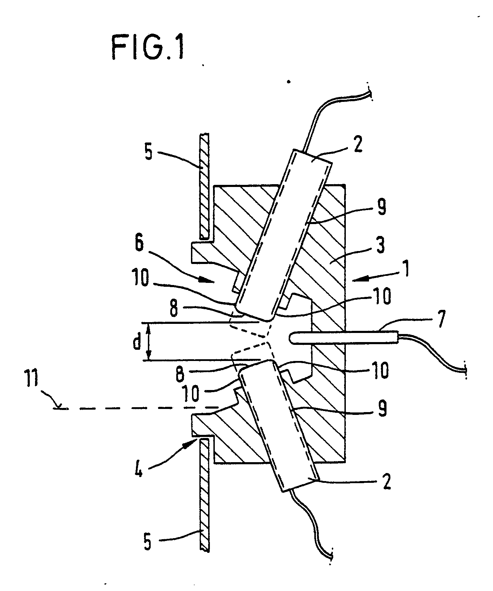

In Fig. 1 ist eine insgesamt mit 1 bezeichnete Leitfähigkeitsmeßzelle zur Messung der spezifischen elektrischen Leitfähigkeit einer an ihren Elektroden 2 anstehenden Flüssigkeit dargestellt. Die Meßzelle 1 besteht aus einem Kunststoffgehäuse 3, welches in einer Öffnung 4 einer Wandung 5 eines das Reinigungsbad enthaltenden Behälters angeordnet ist. Im Bereich der Öffnung 4 weist das Kunststoffgehäuse 3 einen sich konisch in das Kunststoffgehäuse 3 hinein verjüngenden Einschnitt 6 auf. Im Grunde des Einschnittes 6 ist ein in den Einschnitt 6 hineinragender Temperaturfühler 7 angeordnet. Weiterhin sind in dem Kunststoffgehäuse 3 zwei mit einer nicht dargestellten Signalauswerteelektronik in elektrisch leitender Verbindung stehende Leitfähigkeitsmeßelektroden 2 eingebettet. Die meßaktiven Elektrodenflächen 8 ragen in den Einschnitt 6 hinein und sind auf einander zu ausgerichtet, wobei die Elektroden 2 insgesamt in einem stumpfen Winkel zueinander angeordnet sind. Jede einzelne Elektrode 2 ist mittels als Gewinde 9 ausgebildeter Verstellmöglichkeit verstellbar in dem Kunststoffgehäuse 3 festgelegt. Mit Hilfe der Verstellmöglichkeiten 9 ist der Abstand d zwischen den Elektrodenflächen 8 in gewissen Grenzen variabel einstellbar. Die nicht meßaktiven Seiten flächen 10 der Elektroden 2 sind elektrisch isoliert. Insgesamt ist die Meßzelle 1 derart in die Wandung 5 eingebaut, daß der Einschnitt 6, und damit die meßaktiven Elektrodenflächen 8, geringfügig unterhalb des Normalflüssigkeitsniveaus 11 im Reinigungsbad liegt. Ebenso wie die Elektroden 2 ist auch der Temperaturfühler 7 mittels einer elektrisch leitenden Verbindung mit der Signalauswerteelektronik verbunden. Die Meßzelle 1 kann grundsätzlich waagerecht oder senkrecht an der Wandung 5 befestigt sein. Durch den Abstand d zwischen den Elektrodenflächen 9 wird die Zellkonstante bestimmt. Die Seitenwandungen des sich konisch in das Kunststoffgehäuse 3 hinein verjüngenden Einschnittes 6 sowie die meßaktiven Elektrodenflächen 8 sind im Bezug auf die Horizontale schräg zueinander angeordnet, damit diese insbesondere das Eindringen und Abfließen von Schaum nicht behindern bzw. sogar fördern. Insgesamt ist die Leitfähigkeitsmeßzelle 1 somit derart gestaltet und angebracht, daß Flüssigkeit und/oder Schaum problemlos in diese eindringen und aus dieser wieder abfließen kann.

Neben der knapp oberhalb des Normalflüssigkeitsniveaus 11 angeordneten Leitfähigkeitsmeßzelle 1 können weitere Meßzellen oberhalb und/oder unterhalb dieser, insbesondere in senkrechter Übereinanderlage angeordnet sein. Damit sind dann verschiedene Flüssigkeits- bzw. Schaumniveaus zu erfassen. Der Abstand der einzelnen Meßzellen richtet sich dann insbesondere nach der möglichen Volumenabnahme des Flüssigkeitspegels, der mit der Schaumentwicklung einhergeht. Bei senkrechter Übereinanderanordnung mehrerer Meßzellen ist es möglich mehrere Flüssigkeitsniveaus, die bei verschiedenen Wasch- oder Reinigungsprogrammen das Normalniveau bil den, und die von diesem Niveau dann ausgehende Schaumentwicklung zu erfassen. Mit Hilfe des Temperaturfühlers ist es möglich, die spezifische elektrische Leitfähigkeit temperaturkompensiert in der Signalauswerteelektronik zu erfassen.

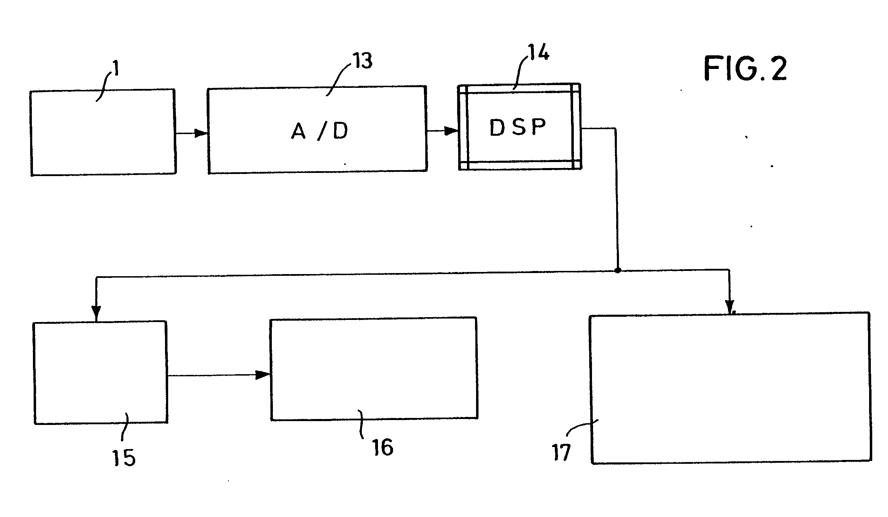

Gemäß Fig. 2 wird das Ausgangssignal der Meßzelle 1 einem Analog/Digital-Umsetzer 13 zugeführt, der dieses Signal in digitaler Form an den digitalen Signalprozessor 14 liefert. Bei dem Signalprozessor 14 handelt es sich um einen der Typen TMS 320 C1X oder TMS 320 C2X von Texas Instruments oder um den Typ MOT 5600 von Motorola. Der Signalprozessor enthält einen Mikroprozessor, der imstande ist, eine Signalanalyse nach einem vorgegebenen mathematischen Algorithmus sehr schnell durchzuführen, sowie eine arithmetische Logikeinheit (ALU) und einen löschbaren Speicher (EPROM). In dem Signalprozessor werden die Leitfähigkeitssignale in digitaler Form durch Fast-Fourier-Transformation (FFT) verarbeitet, so daß das Frequenzspektrum dieser Leitfähigkeitssignale entsteht. Außerdem speichert der Signalprozessor die positiven und negativen Extremwerte der Leitfähigkeitssignale in der auftretenden Reihenfolge zusammen mit den Zeitsignalen dieser Extremwerte ab, wobei nach einem vorgegebenen Kriterium die positive und die negative Hüllkurve der Leitfähigkeitssignale in einer Tabelle gespeichert wird.

Wenn im Signalprozessor 14 übermäßige Schaumbildung erkannt wurde, liefert der Signalprozessor bei jedem Extremwert des Leitfähigkeitssignals einen Impuls an einen Ereigniszähler 15, so daß der Ereigniszähler 15 eine Grobangabe über die Frequenz der Leitfähigkeitssignale enthält. Der Ereigniszähler 15 zählt jeweils die ankommenden Impulse über eine durch Einstellung vorgegebene Zeitspanne und liefert dann seinen Zählerstand an eine Dosiervorrichtung 16, die beispielsweise die Zugabe von Schauminhibitor in die Flüssigkeit steuert.

Beim Zustand übermäßiger Schaumerkennung wird ferner eine Alarmvorrichtung 17 betätigt.

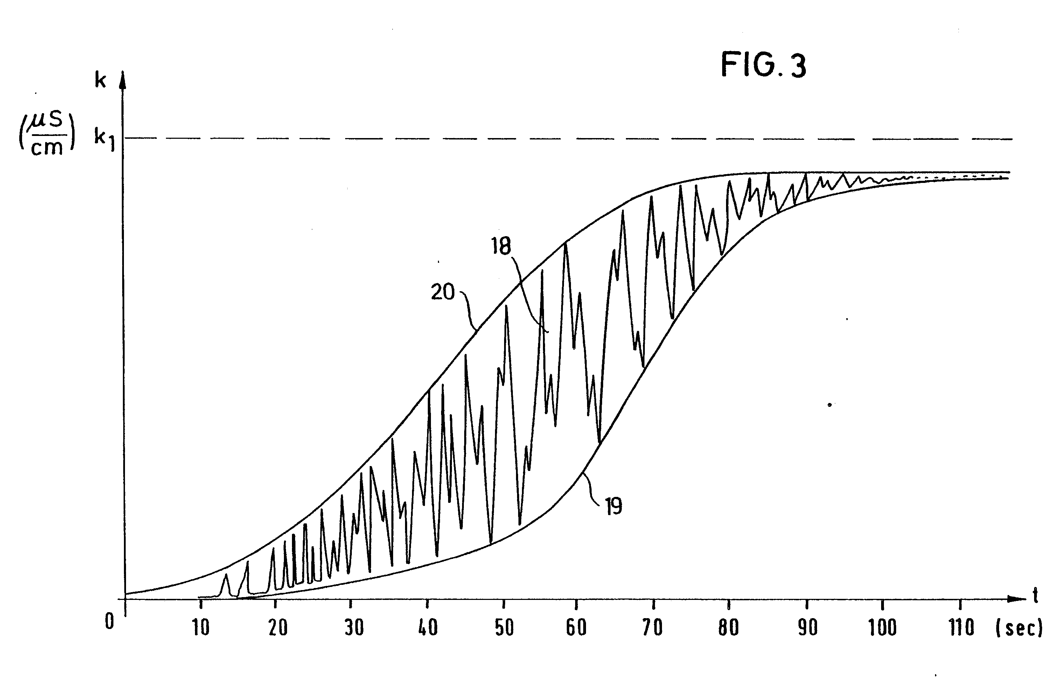

In Fig. 3 ist schematisch der Verlauf des Leitfähigkeitssignals 18 über der Zeit t dargestellt. Die Leitfähigkeit k ist dabei in µS/cm angegeben. Zu Beginn des Schäumens befindet sich die Meßzelle 1 gemäß Fig. 1 oberhalb des Normalflüssigkeitspegels 11. Hierbei ist die gemessene Leitfähigkeit Null. Bei Beginn des Schäumungsprozesses entstehen Leitfähigkeitssignale, die sich entsprechend der Entstehung und dem Zerplatzen von Gasblasen ständig ändern. Im Signalprozessor wird die untere Hüllkurve 19 und die obere Hüllkurve 20 der Leitfähigkeitssignale 18 gespeichert und außerdem wird das Frequenzspektrum festgestellt. Mit zunehmenden Aufschäumen erhöht sich zunächst die Amplitudendifferenz zwischen unterer Hüllkurve 19 und oberer Hüllkurve 20. Diese Amplitudendifferenz verringert sich nachfolgend auf einen sehr kleinen Wert. Die Leitfähigkeit im Bereich der Meßzelle 1 steigt mit zunehmendem Aufschäumen an, um sich asymptotisch einem Grenzwert $k_1$ zu nähern.

Das Frequenzband der Leitfähigkeitssignale liegt zu Beginn des Aufschäumens bei relativ niedrigen Werten, wenn die Meßzelle knapp über dem Flüssigkeitspegel liegt. Im weiteren Verlauf des Aufschäumens erhöhen sich die Frequenzen.

Für die Erkennung übermäßigen Schäumens werden die beiden folgenden Kriterien ausgewertet:
Kriterium a)
In dem Frequenzspektrum des Leitfähigkeitssignals 18 wird eine Frequenz, z.B. die Mittenfrequenz, festgestellt, die oberhalb einer vorgegebenen unteren Grenzfrequenz $f_{UG}$ liegt und deren Amplitude einen vorgegebenen Wert übersteigt;
Kriterium b)
Die Differenz zwischen oberer Hüllkurve 20 und unterer Hüllkurve 19 ist zu irgendeinem Zeitpunkt größer als ein vorgegebener Amplitudengrenzwert $A_G$ der spezifischen Leitfähigkeit.

Beide Kriterien sind zweckmäßigerweise konjunktiv miteinander verknüpft, so daß sie beide erfüllt sein müssen, damit übermäßiges Schäumen festgestellt wird.

Ein praktisch verwendbarer Wert für die untere Grenzfrequenz $f_{UG}$ ist 1 Hz und ein verwendbarer Wert für $A_G$ liegt bei einigen µS/cm.

Zur Regelung der Schaumbekämpfung kann entweder die Differenz zwischen der oberen und der unteren Hüllkurve benutzt werden oder die Mittelfrequenz oder eine andere charakteristische Frequenz des Spektrums der Leitfähigkeitssignale.

Andererseits ist es auch möglich gemäß Fig. 2 die Maxima und/oder Minima der Kurve der Leitfähigkeitssignale in einem Ereigniszähler 15 zu zählen und in Abhängigkeit hiervon die Dosiervorrichtung 16 zu regeln.

## Ansprüche

1. Verfahren zur Schaumerkennung unter Verwendung einer Leitfähigkeitsmeßeinrichtung (1),
**dadurch gekennzeichnet,**
daß als Kriterium für die Schaumentwicklung das Frequenzspektrum der Leitfähigkeitssignale (18) verwendet wird, wobei Schaum erkannt wird, wenn eine charakteristische Frequenz des Spektrums über einer vorgegebenen unteren Grenzfrequenz liegt.

2. Verfahren bei Frequenzen, nach Anspruch 1, dadurch gekennzeichnet, daß als weiteres Kriterium für die Schaumentwicklung die Tatsache benutzt wird, daß die Differenz der oberen und der unteren Hüllkurve (20,19) der Leitfähigkeitssignale (18) einen Amplitudengrenzwert übersteigt bzw. unterschreitet.

3. Verfahren nach Anspruch 1 oder 2, dadurch gekennzeichnet, daß als weiteres Kriterium für die Schaumentwicklung die Tatsache der stetigen Erhöhung des Frequenzspektrums ausgewertet wird.

4. Verfahren nach einem der Ansprüche 1 bis 3, dadurch gekennzeichnet, daß eine Zugabe eines Schauminhibitors oder eine andere schaummindernde Maßnahme in Abhängigkeit von der Differenz zwischen der oberen und der unteren Hüllkurve der Leitfähigkeitssignale erfolgt.

5. Verfahren nach einem der Ansprüche 1 bis 3, dadurch gekennzeichnet, daß eine Zugabe eines Inhibitors oder eine andere schaummindernde Maßnahme in Abhängigkeit von der Größe der charakteristischen Frequenz der Leitfähigkeitssignale (18) erfolgt.

6. Verfahren nach einem der Ansprüche 1 bis 3, dadurch gekennzeichnet, daß eine Zugabe eines Inhibitors oder eine andere schaummindernde Maßnahme in Abhängigkeit von der Anzahl der Extremwerte der Leitfähigkeitssignale innerhalb eines vorgegebenen Zeitraums erfolgt.

7. Vorrichtung zur Schaumerkennung mit einer unter oder über einem Flüssigkeitsniveau (11) angeordneten Leitfähigkeitsmeßeinrichtung (1),
**dadurch gekennzeichnet,**
daß die Signale der Leitfähigkeitsmeßeinrichtung (1) in digitaler Form einem Signalprozessor (14) zugeführt werden, der eine Frequenzanalyse durchführt, und daß die Höhe einer charakteristischen Frequenz des Spektrums für die Schaumbewertung ausgewertet wird.

8. Vorrichtung nach Anspruch 7, dadurch gekennzeichnet, daß der Signalprozessor (14) die obere und die untere Amplitudenhüllkurve (20,19) des Signalverlaufs der Leitfähigkeitssignale (18) bildet und ein Erkennungssignal liefert, wenn die Differenz der Hüllkurven einen vorgegebenen Amplitudengrenzwert ($A_G$) übersteigt.

9. Vorrichtung nach einem der Ansprüche 1 bis 8, dadurch gekennzeichnet, daß die Leitfähigkeitsmeßeinrichtung (1) eine Temperaturkompensation aufweist.

# FIG.1

FIG.2

A / D — DSP — 13, 14

1

15 — 16

17

FIG. 3

$\left(\dfrac{\mu S}{cm}\right)$

$k$

$k_1$

18

20

19

$t$ (sec)

0   10   20   30   40   50   60   70   80   90   100   110